# EUROPEAN PATENT SPECIFICATION

(11) **EP 0 828 432 B1**
(45) Date of publication and mention of the grant of the patent: **18.04.2001**
(21) Application number: 96916156.1
(22) Date of filing: 22.05.1996
(51) Int. Cl.: A23C 19/028, A23C 19/076, A23C 19/05

(54) **PROCESS FOR PREPARING FRESH CHEESE AND FRESH CHEESE OBTAINABLE THEREBY**
VERFAHREN ZUR HERSTELLUNG VON FRISCHKÄSE UND DERART HERGESTELLTER FRISCHKÄSE
PROCEDE DE PREPARATION DE FROMAGE FRAIS ET FROMAGE FRAIS AINSI OBTENU

(30) Priority: 24.05.1995 EP 95201358
(43) Date of publication of application: 18.03.1998
(73) Proprietor: UNILEVER N.V., 3013 AL Rotterdam (NL); UNILEVER PLC, London EC4P 4BQ (GB)
(72) Inventor: BODOR, Janos, NL-2281 EC Rijswijk (NL); KONING, Mettina, Maria, G., NL-2651 JV Berkel & Rodenrijs (NL); SCHMIDT, Michael Union Deutsche Lebensmittelwerke, D-20010 Hamburg (DE); STRATMANN, Wilhelm, D-20010 Hamburg (DE)
(74) Representative: Sikken, Antonius H. J. M.
(86) International application number: EP9602220
(87) International publication number: WO9637114

(56) References cited:
- EP-A- 0 297 676
- WO-A-95/14389
- FR-A- 1 365 678
- FR-A- 2 232 999
- FR-A- 2 360 258
- GB-A- 1 252 833
- US-A- 4 352 826
- DEUTSCHE MOLKEREI ZEITUNG DMZ, vol. 109, no. 18, 1988, MUNCHEN DE, pages 538-543, XP002012487 W. WALENTA ET AL.: "Einfluss von Molkenproteinzusätzen auf die Strukturausbildung von Frischkäsezubereitungen"
- REVUE DES ENIL, vol. 129, 1988, pages 25-27, XP002012488 G. JAUBERT: "Thermisation de fromage de chèvre, type pâte fra*che salée obtenu par ultrafiltration de coagulum acidifié" cited in the application
- AUSTRALIAN JOURNAL OF DAIRY TECHNOLOGY, vol. 48, no. 1, 1993, pages 41-44, XP002012489 C. VERSTEEG ET AL.: "Cottage cheese with ultrafiltration retentates" cited in the application
- MILCHWISSENSCHAFT, vol. 46, no. 3, 1991, pages 153-156, XP002012490 J. KOROLCZUK ET AL.: "Consistency of acid fresh cheese. Role of whey proteins." cited in the application

## Description

The invention relates to a process for preparing fresh cheese and to fresh cheese obtainable by that process.

As described by T.P. Guinee in 2nd Cheese Symposium, 22nd and 23rd November 1990. Editor T.M. Cogan, National Dairy Products Centre, Moorepark, Fermoy pp 31-43, fresh acid curd cheese, (abbreviated here to fresh cheese) is cheese produced by the coagulation of milk, cream or whey via acidification or a combination of acid and heat and which is ready for consumption once the manufacturing operations are complete. They differ from rennet-curd cheese varieties where coagulation is brought about by the action of rennet at pH values of 6.4-6.6, in that coagulation occurs close to the isoelectric point of casein, i.e. pH 4.6, or at higher values when higher temperatures are used as for example in Ricotta (pH 6.0 at 80°C). While a small amount of rennet may be used in the production to give firmer coagula and minimize casein loss (on subsequent whey separation), its addition is not essential.

According to Guinee, quark is a type of fresh cheese normally made from pasteurised skimmilk which is inoculated with a culture and held at an appropriate temperature until a pH-value of 4.6-4.8 is reached. Optionally shortly after addition of the culture a small quantity of rennet (0.5 ml-1.0 ml per 100 1 milk) is added when the pH is approximately 6.3. After reaching the pH of 4.6-4.8, the acidified gelled milk is pumped to a quark centrifuge where whey is removed and the quark exiting from the centrifuge is packed.

With respect to quark, Guinee describes that several methods are employed to reduce the loss of protein in the whey and increase the yield:
* Pasteurize the milk at 95-96°C x 2-3 minutes, acidify the milk and heat the gelled milk (pH 4.6) to 60°C x 3 minutes, then cool to the separating temperature.
* Whey from the quark separator is heated (95°C) to precipitate the whey proteins. The whey proteins are recovered by centrifugation and added back into the cheese milk for the next batch of quark.
* The quark whey is heated to 95°C and the flocculated whey proteins are allowed to settle, a whey concentrate is obtained by decondition which is further concentrated via a quark separator and the obtained whey quark is added at a rate of 20% to regular quark.
* The whey removal is effected by ultrafiltration. The membrane retains the whey protein. However to make the whey proteins contribute to the gel formation it is recommended to apply a high milk pasteurisation temperature (i.e. 95°C x 3-5 min) so as to achieve a completing of denatured whey proteins and casein and thus to bring the level of gel-participating protein "back" to that of standard quark, otherwise the product is too liquidly and soft due to the lower level of structure building protein.

Thus, all these methods result in the denaturation of the whey proteins contained in the end product.

More detailed descriptions about the separation of whey after coagulation of the protein by means of ultrafiltration or diafiltration are given in FR 2232999 and WO 88/04141.

Regarding the production of quark using ultra filtration with a high milk pasteurisation temperature, Guinee reports: "Our experience at Moorepark has been that quark produced by the recommended UF-method has a smoother mouthfeel, a less grainy and more homogenous texture and a lower tendency to "wheying-off" on storage. We attribute this primarily to the interaction of β-lactoglobulin (β-1g) and k-casein as affected by the high pasteurization temperature of the UF method. This interaction leads to the formation of tendrils (of β-lg) protruding from the casein micelle surfaces which prevents, via steric hindrance, close approach of, and hence large-scale fusion of, casein micelles on acidification and therefore gives a finer gel structure which is less susceptible to syneresis."

Milchwissenschaft 46 nr 3, (1991), 153-156 reports the results of a study on the effect of wheyproteins on the consistency of acid fresh cheese. Skimmilk was pasteurised for 15 sec. at 72°C. Rennet and starter culture were added. At a pH of 4.7 whey was removed with microfiltration to obtain the cheese. Acid whey was concentrated using ultrafiltration. The whey retentate was then heated 20 minutes at 65°C or 3 minutes at 95°C. The high temperature treatment caused the wheyproteins to denature, the low temperature treatment did not. Varying amounts of each of the whey retentates were mixed with the cheese and the consistency of the resulting products was evaluated. The report concludes that the non-denatured wheyproteins do not participate in the texture formation of acid type fresh cheese.

In the preparation of certain types of fresh cheese a heattreatment is applied before separating off the whey. The temperature of this treatment is mostly about 60°C. The treatment serves to optimize the structure of the coagulated milk to facilitate subsequent removal of the whey and reach a higher dry matter content. Such a treatment is especially applied in the production of cheeses like cottage cheese, baker's cheese, neufchatel cheese and single or double cream cheese.A short heattreatment at about 60°C after acidification is also often applied to inactivate the lactic acid culture to prevent the product from becoming too sour. Occasionally the heattreatment is applied at a higher temperature to further denature the whey protein and thereby reduce their subsequent loss in the whey in the separation step. The presence of the additional denatured wheyprotein results in a more firm product. Such processes are for example described in US 3297451, US 3431115, US 4352826, GB 1252833, FR 2705015 and Austr. J. Dairy Techn. 48, (May 1993), 41-44.

Relative to their composition the resulting products are rather soft. If relatively more firm fresh cheese is to be prepared, this increased firmness can be obtained by subjecting the curd obtained from the acidified milk after removal of the whey to an appropriate heattreatment. This heattreatment results in the formation of a network of the casein that was already coagulated before by the acidification. This network gives a firmer structure to the end product.

Such processes are for example described by Guinee cited above for single and double cream cheese, for aerated white cheese in FR 1365678, for chèvre-cheese in Revue des ENIL, 129, (1988), p. 25-27. and for double cream cheese in example III of EP 297676. These descriptions relate to products with a regular or elevated fat content.

A different approach to making fresh cheese is described in FR 2360258 and FR 2410961. In this approach first a composition is put together that has the composition as desired for the end product. This composition is pasteurised or sterilised and then aseptically packed, while just before packing a fermentation agent is added to cause the pH to reduce and protein to coagulate. Thus, the structure of the product forms in the pack. The texture of the products so prepared is quite different from those of regular fresh cheese in which after the acidification the structure formed is subjected to working in several process steps.

EP 297676, already referred to above, further discloses the preparation of products with unusually low contents of milk derived solids and substantial amounts of added sugar. The starting milk should contain at least 0.5% fat. After acidification a short heating at 56°C is applied and the whey is removed with ultrafiltration. Then the balance of cream and sugar and other additives are admixed and the mixture is treated by mixing at a temperature of at most 65°C while this temperature can be 0.05-5°C lower for each 0.1% that the fat content in the original milk exceeds 0.5% by weight. The mixing can e.g. be done in a static mixer or in a dynamic mixer equipped with a large number of beating pins. The residence time in the mixer is not of critical importance. In this way the yield of product can be increased by 20%. In the example illustrating the process, the starting milk was pasteurized for 6 minutes at 92°C.

We found that in the preparation of harder fresh cheese, using a heattreatment subsequent to acid coagulation and whey removal to increase the firmness of the product, the texture of the product can be suboptimal. The product can have a coarse structure resulting in a poor mouthfeel, the product being perceived to be "sandy" or "grainy". This problem can particularly occur if the fat content of the fresh cheese is low, e.g. less than 10%. But also for products with somewhat higher fat contents we found the structure often to be not fully satisfactory.

Problems of graininess in attempts to produce low fat cream cheese products are also reported in EP 526086. The process of EP 526086 is a complex one, resulting in a non-fat processed cheese resembling cream cheese. First skimmilk retentate is acidified under conditions such that coagulation does not occur. The pH is 4.8-5.2. Then emulsifying salts and cottage cheese are added. If the amount of cottage cheese in the end product exceeds 20%, the pH of the retentate should be 4.8-5.0, else it should be 5.0-5.2. The composition is mixed and heated. At a temperature of 21.1-65.6 °C non fat dry milk is added. When the temperature reaches 60-73.9 °C xanthan gum is added. When the temperature has become 73.9 - 87.8 °C salt, sugar and carrageenan are added. Then mixing is continued for 1-4 minutes without heating and the composition is homogenized to obtain the end product. The function of the emulsifying salts is speculated to be breakdown of the curd protein structure and binding of calcium from the retentate. The incorporation of the skimmilk powder in the process of EP 526086 will cause an increase in the pH of the product. Also emulsifying salt will typically raise the pH of the product. At higher pH, the product typically becomes less firm, but this is corrected for by the use of xanthan gum. EP 526086 reports that without xanthan gum the product has the consistency of sour cream.

We have studied this sandiness problem and tried many things to improve the texture of such reduced fat harder fresh cheeses, especially the low fat ones. At first we did not question the high temperature pasteurisation applied, because according to the same logic as described by Guinee above for quark, we expected only benefits for the texture of the product from denaturing the whey proteins in pasteurisation.

Surprisingly, we found, however, that in making relatively firm reduced fat fresh cheese using a process involving heattreatment subsequent to coagulation by acid and whey removal to achieve increased firmness, improved product texture is obtained if the heattreatment is carried out in the presence of substantially undenatured whey protein. Whereas texture benefits were observed also for reduced fat and high fat cheese, truly striking improvements were obtained for low fat cheeses.

Accordingly, the invention provides a process for preparing fresh cheese having a smooth texture and a firmness as characterised by a Stevens value at 10°C of at least 150 g, having a pH of 4.5-5.0, a fat content of 0-15% and a dry matter content of at least 22%, comprising the steps of
a. causing milk to acidify to a pH of 4.5-5.0 to cause coagulation of protein
b. removing whey to obtain a curd
c. applying a heattreatment at a pH of 4.5-5.0, at a temperature of at least 65 °C for a period of time sufficient to increase the firmness of the resulting product, wherein the composition that is subjected to the heattreatment comprises substantially undenatured wheyprotein;
wherein said substantially undenatured whey protein is caused to be present in the composition that is subjected to the heat treatment in step (c) either by using in step (a), milk that has not been subjected to a treatment that causes substantial denaturation of whey protein or by adding undenatured whey protein prior to the heat treatment; and wherein the heat treatment of step (c) is applied after the whey removal of step (b).

The resulting products have improved texture. Accordingly the invention encompasses fresh cheese with a reduced fat content having a smooth texture and a high firmness relative to its composition, having a Stevens value at 10°C of at least 150 g, a pH of 4.5-5.0, a fat content of 0-15% and a dry mattter content of at least 22% obtainable by the present process.

The Stevens value of the product (expressed in grams) is a measure for its firmness at the indicated temperature. It can be measured using a Stevens Texture Analyzer (ex Stevens Advanced Weighing Systems, UK). Prior to the measurement the product is kept at the measurement temperature for 24h. The measurement is carried out with a Ø12.7 mm cylinder operated with speed 60 mm/min using a penetration depth of 20 mm. A Stevens value of 150 g at 10°C indicates a product that is substantially more firm than quark. Preferably our fresh cheese has a firmness at 10°C corresponding to a Stevens value of 175-300, more preferably of 200-250 g.

Preferred embodiments of the process are given in claims 2-8 and of the product in claim 10.

In step b) of the process, whey is removed and in step c) a heattreatment is applied to obtain a relatively firm end product.

To obtain the desired product with a relatively high firmness considering its composition, and a smooth texture, the heattreatment must be applied to the curd after the whey has been removed therefrom. If the heattreatment is applied before the whey removal, we found that the firmness increase relative to the composition of the endproduct is less and/or the texture of the product is more coarse. The heattreatment applied in certain processes before whey removal serves a different purpose. For example in cottage cheese, it is desirable for the product to contain pieces of curd resembling "popped corn". To obtain this structure, heating after coagulation before whey removal is required. If the heating were applied after the whey had been removed, the pieces would cling together and it would not be possible to obtain this popcorn like structure.

The heattreatment must be applied to the curd having a pH of 4.5-5.0. If for example the heattreatment were applied to a composition having the same composition as the endproduct but having a substantially higher pH, and the pH would be reduced subsequently, the heattreatment would not be very effective to raise the firmness of the resulting product.

We believe that the specific conditions of the heattreatment required for obtaining the fresh cheese products that, considering their composition, are relatively hard, are also responsible for causing the sandiness problem when applying such process for making, in particular, low fat cheese.

To obtain the required firmness a heattreatment at a temperature of at least 65°C is required. For how long this treatment must be applied depends to some extent on the precise conditions, e.g. whether or not simultaneously shear is applied. At 65°C, obtaining the required firmness will take relatively long. At a temperature above 65°C, the increase of firmness is achieved much faster. Accordingly the heattreatment is preferably applied for a period of 2 minutes to 1 hour, preferably 2-30 minutes at a temperature of 65-95°C, more preferably 65-85°C, especially 68-75°C.

Under practical circumstances, while applying agitation to prevent large temperature differences in the curd, the time of heattreatment in the temperature range of 65-75°C preferably is at least t= -1.4T+108 wherein t is the duration of the heattreatment in minutes and T is the temperature of the treatment in °C. At temperatures above 75°C, a duration of 2-3 minutes can be sufficient.

On the other hand, the heattreatment should preferably not be too severe else the product may become brittle and excessively hard. Considering that some time is required to reach the heattreatment temperature and that strong local overheating is preferably avoided, the temperature of the heattreatment is preferably not higher than 85° C. The duration of the heattreatment in the temperature range of 65-85°C preferably is not longer than t'=-2.5 T+220 wherein t' indicates the duration of the heattreatment in minutes and T indicates the heattreatment temperature in °C.

If a temperature above 85°C is applied denaturation of whey protein will occur. We found that this can be tolerated; it is essential that substantially undenatured whey protein is present in the composition at the beginning of the heattreatment. It is preferred however to carry out the heattreatment such that little or no denaturation of the whey protein occurs during this treatment and for this reason also a temperature below 85°C is preferably employed.

First effecting whey removal and subsequently applying the heattreatment while ensuring that the composition that is subjected to the heattreatment comprises substantially undenatured whey protein, can be done in a number of ways.

For example, in step a) of the process a milk can be used that has been subjected to a pasteurisation or sterilisation at a temperature high enough to cause denaturation of whey protein. After acidification and coagulation in step a), whey can be removed using for example a centrifuge or ultrafiltration. In both cases the whey protein will be retained in the product. Subsequently, a source of undenatured whey protein, e.g. whey protein concentrate, is mixed into the curd and the resulting mixture is heattreated to increase the firmness of the resulting product.

Alternatively, a milk can be used that has not been subjected to treatment that causes denaturation of whey protein. If subsequent to coagulation, whey is removed with a centrifuge, most of the whey proteins will be lost with the whey and therefore a source of undenatured whey protein should be admixed before heattreating the curd. Because of the loss of whey proteins that occurs in this way, this process is not preferred. However, the process does give the desired texture improvement in the end product and is therefore included in the scope of the invention.

Preferably, in step a) milk is used that has not been subjected to treatment that causes substantial denaturation of whey protein, followed after acidification and coagulation by whey removal by means of ultrafiltration to obtain a retentate that still contains whey protein in substantially undenatured form. To this retentate, further undenatured whey protein may be added, but this is not usually necessary. Subsequently, the heattreatment is applied.

The milk used as the starting material may have been standardized to obtain for example a predetermined fat and protein content in the end product. Also skimmilk or milk otherwise modified can be used, for example some whey or buttermilk obtained from other processes may be included. Preferably, the milk employed is such that, taking into account possible subsequent additions, e.g. of undenatured whey protein, the composition that is subjected to the heattreatment comprises substantially undenatured whey protein and casein in a weight ratio of 1:10 to 1:1 preferably of 1:7 to 1:3, particularly about 1:5. Preferably at least 60% more preferably 70-85% of the protein in the endproduct is casein.

Substantially undenatured whey protein is whey protein that in its functional properties behaves very similar to whey protein in raw untreated milk. The possibility cannot be excluded that normal handling and processing of milk causes some changes in the whey protein but these changes do not translate into significant changes in functional properties of the whey protein. For example, the whey protein in standardized homogenized and mildly pasteurized (75°C x 10 min) milk and in regular whey protein concentrate powders is substantially undenatured whey protein. Denaturation of whey protein can for example be measured by means of Fast Protein Liquid Chromatography (Can. Inst. Food Sci. Techn. J. 19, (1986), 163-166), by PAGE (polyacrylamide gel electrophoresis, J. Dairy Research, 46, (1979), 95-102) and by Capillary Zone Electrophoresis (High performance capillary electrophoresis, Hewlett Packard, France 1992). For practical purposes it can be taken that the wheyprotein in milk that has not been subjected to special treatment and that has not been heated to above 80°C, is substantially undenatured. If the milk has been heated to 85°C or more for a significant period of time, the wheyproteins are largely denatured. With respect to special wheyprotein sources such as whey protein concentrates and isolates, whether in liquid or powder form, the supplier's information on the state of the protein can be followed.

The acidification of the milk in step a) to cause coagulation can be effected by addition of for example inorganic acid, organic acid and/or delta glucono lactone, but preferably the acidification is achieved by means of a starter culture in a usual manner by keeping the inoculated milk, depending on the culture used, at an appropriate temperature for a period of time sufficient to cause the pH to reduce to 4.5-5.0, preferably 4.6-4.9, which causes coagulation to occur. It may be possible to choose conditions such that at a pH close to 5.0 coagulation does not occur or only very slowly. Under normal conditions however, coagulation will occur. See e.g. Guinee cited above. Rennet or another milk clotting enzyme may be added in small amounts, e.g. after the pH has reached 6.3.

The coagulated milk is subjected to whey removal in step b) and to heattreatment in step c) of the process as described above. If ultrafiltration is used to remove whey, this will usually be done at a temperature of 45-60°C. If appropriate, the temperature of the composition will be adjusted accordingly. This will inactivate the starter culture in case a culture active at lower temperatures was used. If a culture is applied that is active at higher temperatures, a short heattreatment may be applied prior to whey removal, sufficient to inactivate the starter e.g. at a temperature of 60°C for about 3-5 minutes. The whey removal is preferably carried out such that, taking into account an optional subsequent addition of undenatured whey protein, the end product has a dry matter content of at least 22%, preferably at least 25%, more preferably 27-35%. To obtain the right texture, the whey removal in step b) is preferably such that also the curd obtained itself has a dry matter content of at least 22%, more preferably at least 25%, especially 27-35%.

The heattreatment in step c) described above to obtain a sufficiently firm product, is preferably carried out such that it is also effective to pasteurize the product. This is particularly desirable if in step a) milk is used that has not been pasteurized or sterilized. The heattreatment is also effective to eliminate any possibly still remaining activity of the starter culture or the rennet, if they were used. Thus, the endproduct preferably does not contain active lactic acid bacteria or other active cultures or enzymes.

To obtain a very smooth product, the composition resulting from step c) is preferably subjected to a homogenisation treatment. Such treatment is especially beneficial for the texture of the resulting product in case this has a relatively low fat content. Applying such treatment can suitably be done by passing the composition through a high pressure homogenizer, preferably operating at a pressure of at least 50 bar, more preferably 70-400 bar.

The optionally homogenized product is then ready to be packed. A most efficient and hygienic process is obtained if after the heattreatment of step c), the preferably applied homogenisation is done while the product is still hot and the product is packed while it still has a temperature of 65° or higher, preferably at least 70°C.

The process is applied for products having a fat content of 0-15%, but it is particularly beneficial for low fat fresh cheese, i.e. having a fat content of less than 10%, particularly 5-10%. Therefore, in step a) preferably milk is employed with a fat content such that the end product will be a low fat fresh cheese. In practice this will usually mean using milk in step a) containing 0-3%, particularly 0-2.5% and the use of such milk is preferred. The process is particularly applicable for reduced fat fresh cheese products, i.e. products having a fat content less than what would be obtained if the fresh cheese were prepared from whole milk by the same process resulting in the same dry matter content. The amount of fat than can be present in reduced fat fresh cheese of course depends on the degree of concentration, i.e. the amount of whey removed and on the type of starting milk. For the present process preferably milk derived from cow's milk is used. In practice, reduced fat fresh cheese will normally have a content of at most about 15% and usually less. The process is in particular beneficial for fresh cheese containing less fat than protein. The protein content of the product preferably is 9-16%, especially 10-14%. The fat in dry matter content of the fresh cheese preferably is less than 40%.

We believe that if fresh cheese with a fat content of e.g. 4% is prepared by a process that involves a heattreatment subsequent to coagulation and whey removal, to increase the firmness wherein no undenatured whey protein is present during the heattreatment, a very strong casein network may be formed. Upon eating, this strong network gives a very unpleasant mouthfeel, e.g. as if there is sand in the product. At higher fat contents this sandiness impression of the cheese may be less but still the texture of the product is improved by the presence of undenatured whey protein in the composition that is subjected to the heattreatment. Only for full fat products and products with an elevated fat content caused to have a relatively firm structure by heattreatment at low pH subsequent to whey removal dit we not encounter sandiness problems.

Whether a product is smooth or sandy, is best assessed by means of a trained panel. We do not know of a fully satisfactory objective measurement to characterise this property, but we found that reasonably good correlation is obtained with microscrew measurement. For this measurement, the product is diluted with some water acidified to the same pH as the product e.g. in a 1:1 ratio and the particle size is measured with a microscrew. To obtain reproducible results with this method requires some training, but it is a method regularly used in the food industry. For example it is also used (without dilution) to check the refining of chocolate compositions in confectionery manufacturing. We found that smooth fresh cheeses typically have a particle size as measured with the microscrew of less than about 45 µm, preferably 5-40 µm, especially 10-30 µm.

It may be that the strong sandiness impression can also be prevented by the choice of other materials to be present in the composition to be heattreated. Such materials may also be able to prevent the formation of a too strong casein network. However, we believe that such other materials would be non-dairy materials, e.g. non-dairy gums or stabilizers and/or emulsifying salts. Many customers dislike the presence of such additives and therefore their use should preferably be avoided. Furthermore, such materials may also cause further changes in the product, especially in texture and mouthfeel, in addition to reducing sandiness, and such further changes may not be beneficial.

However, non-dairy materials such as herbs and spices, salt and other taste/flavour imparting materials, pieces of fruit or nut etc. often do meet with customer approval. Such non-dairy materials may be incorporated in the product in a usual manner by including them at an appropriate stage during the preparation. However, the combined amount of non dairy solids calculated on the dry matter content of the product should preferably not exceed 15%, more preferably it is less than 10%. Similarly, e.g. for taste reasons, other dairy ingredients may be incorporated for example yoghurt, buttermilk, or buttermilk powder, cream etc. However, in order to obtain the right product texture preferably the majority of at least the casein, e.g. 70% or more, of the end product should originate from the milk that is coagulated in step a) of the process. More preferably 90-100% of the casein of the product originates from the milk of step a). Any ingredients added are preferably incorporated before the heattreatment of step c). This facilitates obtaining the right texture for the endproduct.

Throughout this specification, all percentages, parts and proportions are by weight.

### Example 1

Raw milk was passed through a cream separator to separate it into cream and skimmilk. The milk was standardized by homogenising the skimmilk with a portion of the cream to obtain a fat content of 2.5wt%. The milk had a casein content of 2.6% and a whey protein content of 0.6%. The milk was pasteurized at 72°C for 10 minutes. Substantially no denaturation of the whey protein occurred. The pasteurized milk was cooled down to 22°C and inoculated with a starter culture. After about 18 hours the pH had reduced to about 4.7 and coagulation had occurred. The coagulated milk was gently stirred and passed through a heat exchanger which raised the temperature to 52°C. The milk was then subjected to ultrafiltration and a retentate was obtained having a dry matter content of 30%. To the retentate 0.8% salt (NaCl) was admixed. The retentate was then passed through a heatexchanger, which raised the temperature to 69-70°C. The hot composition was fed into a tank provided with a heating jacket and the temperature was maintained at 69-70°C. Continuously, hot retentate was fed into the vessel at the top while simultaneously product was withdrawn from the bottom of the tank. The average residence time in the jacketed vessel was 10 minutes. The heattreated mixture drawn from the bottom of the tank was passed through a 2 step APV Gaulin^{®} high pressure homogenizer. The first step was operating at a pressure of 100 bar, the second step was at 20 bar. The resulting product was directly fed to a filling line in which it was filled in tubs while the temperature was still 68-69°C and the tubs were sealed and turned over. The products were stored for 1 week at 5°C and subsequently put at 10°C for 24 hours. Then the Stevens value at 10°C was measured. It was 202 g.

The product had an excellent smooth texture. No sandiness or graininess could be perceived in the mouth.

For comparison (Comparison A), the above trial was repeated except that the milk was pasteurized for 5 minutes at 95°C. Substantially complete denaturation of the whey protein had occurred.

The product was somewhat more firm than the one described above and its texture was coarse. In the mouth it gave an impression as if it contained sand.

### Examples 2-3

Cow's milk was standardized to a fat content of 2.5%. It was pasteurized for 20 minutes at 90°C, cooled down to 23°C and inoculated with 1% starter culture and 0.001% rennet. After 18 hours, the pH was 4.8 and the composition was heated in 15 minutes to 60°C and kept at this temperature for 5 minutes to inactivate the culture. The acidified milk was cooled to 50°C and concentrated with ultrafiltration. To 90 parts of retentate 10 parts skim yoghurt (0.1% fat) and 0.7 parts salt were added, and either 0% (comparison B), 2% (ex. 2) or 4% (ex. 3) wheyprotein isolate was mixed in. The composition was heated to 72°C, kept at this temperature for 5 minutes , and packed at a temperature above 68°C. The products were stored at 5°C.

The dry matter contents of the products as measured was found to be in the range of 28-30%. The fat content of the products was 9-10%. The firmness of all 3 products was acceptable. Evaluation by the expert panel showed the product of comparison B to be sandy while those of examples 2 and 3 were clearly more smooth.

Similar beneficial effect of added undenatured whey protein was observed in products that subsequent to the heattreatment were homogenized at 200 bar.

Investigation of the microstructure of the products with confocal scanning laser microscopy confirmed that the i products of the examples had a homogeneous protein network while that of the comparison had a coarse protein distribution.

## Claims

1. Process for preparing fresh cheese having a smooth texture and a firmness as characterised by a Stevens value at 10°C of at least 150 g, having a pH of 4.5-5.0, a fat content of 0-15% and a dry matter content of at least 22%, comprising the steps of
a. causing milk to acidify to a pH of 4.5-5.0 to cause coagulation of protein
b. removing whey to obtain a curd
c. applying a heat treatment at a pH of 4.5-5.0, at a temperature of 65-85 °C for a period of time sufficient to increase the firmness of the resulting product, wherein the composition that is subjected to the heat treatment comprises substantially undenatured wheyprotein;
wherein said substantially undenatured whey protein is caused to be present in the composition that is subjected to the heat treatment in step (c) either by using in step (a), milk that has not been subjected to a treatment that causes substantial denaturation of whey protein or by adding undenatured whey protein prior to the heat treatment; and
wherein the heat treatment of step (c) is applied after the whey removal of step (b).

2. Process according to claim 1, wherein the weight ratio of the amount of substantially undenatured whey protein present in the composition that is subjected to the heattreatment in step c), and the amount of casein in that composition is between 1:10 and 1:1.

3. Process according to any one of claims 1-2, wherein the milk has a fat content of 0-3 wt%, preferably 0-2.5%.

4. Process according to any one of claims 1-3, wherein in step b), whey is removed by ultrafiltration and retentate is subjected to the heattreatment in step c) .

5. Process according to any one of claims 1-4, wherein in step c) a heattreatment of at least 2 minutes is applied at a temperature of 65-85°C.

6. Process according to any one of claims 1-5, wherein the curd obtained in step b) has a dry matter content of at least 22%, preferably at least 25%, more preferably 27-35%.

7. Process according to any one of claims 1-6, wherein the curd is subjected to a homogenisation treatment.

8. Process according to claim 7, wherein the homogenisation treatment is carried out by passing the curd through a high pressure homogenizer operating at a pressure of at least 50 bar.

9. Fresh cheese with a reduced fat content having a smooth texture and a high firmness relative to its composition having a Stevens value at 10°C of at least 150 g, a pH of 4.5-5.0, a fat content of 0-15% and a dry matter content of at least 22% obtainable by a process according to any one of claims 1-8.

10. Fresh cheese according to claim 9, having a fat content of 0-10%, preferably 5-10%.

## Patentansprüche

1. Verfahren zur Herstellung von Frischkäse mit einer geschmeidigen Textur und einer Festigkeit, charakterisiert durch einen Stevens-Wert bei 10°C von mindestens 150 g, mit einem pH-Wert von 4,5 bis 5,0, einem Fettgehalt von 0 bis 15% und einem Trockenmassegehalt von mindestens 22%, umfassend die Schritte:
a. Ansäuern von Milch auf einen pH-Wert von 4,5 bis 5,0, um die Koagulation von Protein zu bewirken,
b. Entfernen von Molke, um einen Niederschlag zu erhalten,
c. Durchführen einer Wärmebehandlung bei einem pH-Wert von 4,5 bis 5,0 bei einer Temperatur von 65 bis 85°C für eine ausreichende Zeitspanne, um die Festigkeit des resultierenden Produkts zu erhöhen, worin die Zusammensetzung, die der Wärmebehandlung unterworfen wird, im wesentlichen nicht denaturiertes Molkeprotein umfasst,
worin das im wesentlichen nicht denaturierte Molkeprotein in der Zusammensetzung vorhanden ist, die der Wärmebehandlung in Schritt (c) unterworfen wird, entweder durch Verwendung von Milch in Schritt (a), die keiner Behandlung, welche eine wesentliche Denaturierung von Molkeprotein bewirkt, unterworfen wurde oder durch Zugabe nicht denaturierten Molkeproteins vor der Wärmebehandlung, und worin die Wärmebehandlung von Schritt (c) nach der Molke-Entfernung von Schritt (b) durchgeführt wird.

2. Verfahren nach Anspruch 1, worin das Gewichtsverhältnis der Menge an im wesentlichen nicht denaturiertem Molkeprotein, das in der Zusammensetzung, die der Wärmebehandlung in Schritt c) unterworfen wird, vorliegt und die Menge an Kasein in dieser Zusammensetzung zwischen 1:10 und 1:1 liegt.

3. Verfahren nach mindestens einem der Ansprüche 1 bis 2, worin die Milch einen Fettgehalt von 0 bis 3 Gew.-%, bevorzugt 0 bis 2,5 Gew.%, aufweist.

4. Verfahren nach mindestens einem der Ansprüche 1 bis 3, worin in Schritt b) Molke durch Ultrafiltration entfernt und der Rückstand in Schritt c) der Wärmebehandlung unterworfen wird.

5. Verfahren nach mindestens einem der Ansprüche 1 bis 4, worin in Schritt c) eine Wärmebehandlung von mindestens 2 Minuten bei einer Temperatur von 65 bis 85°C durchgeführt wird.

6. Verfahren nach mindestens einem der Ansprüche 1 bis 5, worin der in Schritt b) erhaltene Niederschlag einen Trockenmassegehalt von mindestens 22%, bevorzugt mindestens 25%, inbesondere bevorzugt 27 bis 35%, aufweist.

7. Verfahren nach mindestens einem der Ansprüche 1 bis 6, worin der Niederschlag einer Homogenisierungsbehandlung unterworfen wird.

8. Verfahren nach Anspruch 7, worin die Homogenisierungsbehandlung durch Durchtritt des Niederschlags durch einen bei einem Druck von mindestens 50 bar arbeitenden Hochdruckhomogenisator durchgeführt wird.

9. Frischkäse mit reduziertem Fettgehalt mit einer geschmeidigen Textur und hoher Festigkeit, abhängig von der Zusammensetzung, mit einem Stevens-Wert bei 10°C von mindestens 150 g, einem pH-Wert von 4,5 bis 5,0, einem Fettgehalt von 0 bis 15% und einem Trockenmassegehalt von mindestens 22%, erhältlich durch ein Verfahren nach mindestens einem der Ansprüche 1 bis 8.

10. Frischkäse nach Anspruch 9 mit einem Fettgehalt von 0 bis 10%, bevorzugt 5 bis 10%.

## Revendications

1. Procédé de préparation de fromage frais ayant une texture lisse et une fermeté telle que caractérisée par une valeur de Stevens d'au moins 150 g à 10°C, ayant un pH de 4,5 - 5,0, une teneur en matière grasse de 0 - 15 % et une teneur en matière sèche d'au moins 22 %, comprenant les étapes consistant à :
a) acidifier le lait jusqu'à un pH de 4,5 - 5,0 afin d'entraîner la coagulation de la protéine ;
b) retirer le petit lait afin d'obtenir un caillé
c) appliquer un traitement thermique à un pH de 4,5 - 5,0, à une température comprise entre 65°C et 85°C pendant un temps suffisant pour augmenter la fermeté du produit qui en résulte ; dans lequel la composition qui est soumise au traitement thermique est composée de protéine de petit lait substantiellement non dénaturée ;
dans lequel ladite protéine de petit lait substantiellement non dénaturée qui est présente dans la composition qui est soumise au traitement thermique dans le cadre de l'étape (c), l'est du fait que soit on utilise dans le cadre de l'étape (a) du lait n'ayant pas été soumis à un traitement entraînant la dénaturation substantielle de la protéine de petit lait, soit on ajoute de la protéine de petit lait non dénaturée avant le traitement thermique ; et
dans lequel le traitement thermique de l'étape (c) est appliqué après le retrait du petit lait de l'étape (b).

2. Procédé selon la revendication 1, dans lequel le rapport en masse entre la quantité de protéine de petit lait substantiellement non dénaturée qui est présente dans la composition qui est soumise à un traitement thermique dans le cadre de l'étape (c), et la quantité de caséine dans cette composition est compris entre 1 pour 10 et 1 pour 1.

3. Procédé selon l'une des revendications 1 - 2, dans lequel le lait a une teneur en matière grasse de 0 - 3 % en masse, de préférence de 0 - 2,5 % en masse.

4. Procédé selon l'une des revendications 1 - 3, dans lequel dans le cadre de l'étape (b), le petit lait est retiré par ultra filtration et le rétentat est soumis au traitement thermique dans le cadre de l'étape (c).

5. Procédé selon l'une des revendications 1 - 4, dans lequel dans le cadre de l'étape (c), on applique un traitement thermique pendant au moins 2 minutes à une température de 65 - 85°C.

6. Procédé selon l'une des revendications 1 - 5, dans lequel le caillé obtenu dans le cadre de l'étape (b) a une teneur en matière sèche d'au moins 22 %, de préférence d'au moins 25 %, de façon plus préférentielle comprise entre 27 - 35 %.

7. Procédé selon l'une des revendications 1 - 6, dans lequel le caillé est soumis à un traitement d'homogénéisation.

8. Procédé selon la revendication 8, dans lequel le traitement d'homogénéisation est effectué en faisant passer le caillé par un homogénéisateur haute pression fonctionnant à une pression d'au moins 50 bars.

9. Fromage frais à teneur réduite en matière grasse ayant une texture lisse et une grande fermeté par rapport à sa composition, ayant une valeur Stevens d'au moins 150 g à 10°C, un pH de 4,5 - 5,0, une teneur en matière grasse de 0 - 15 % et une teneur en matière grasse d'au moins 22 %, pouvant être obtenu par un procédé selon l'une des revendications 1 - 8.

10. Fromage frais selon la revendication 9, ayant une teneur en matière grasse de 0 - 10 %, de préférence de 5 - 10 %.
